(19) Europäisches Patentamt
European Patent Office
Office européen des brevets

(11) EP 0 884 320 A2

(12) EUROPEAN PATENT APPLICATION

(43) Date of publication:
16.12.1998 Bulletin 1998/51

(51) Int. Cl.$^6$: C07F 7/00

(21) Application number: 98109852.8

(22) Date of filing: 29.05.1998

(84) Designated Contracting States:
AT BE CH CY DE DK ES FI FR GB GR IE IT LI LU MC NL PT SE
Designated Extension States:
AL LT LV MK RO SI

(30) Priority: 13.06.1997 NZ 32808797

(71) Applicant:
Industrial Research Limited
Lower Hutt (NZ)

(72) Inventors:
- Kemmitt, Timothy
Kelson Wellington (NZ)
- Bagshaw, Stephen Allan
Kaikohe (NZ)
- Daglish, Marc
Wainuiomata (NZ)
- Yamada, Kinji
Tsukuba-shi, Ibaraki (JP)
- Katsumata, Hideo
Yokkaichi-shi, Mie (JP)

(74) Representative:
Pellmann, Hans-Bernd, Dipl.-Ing. et al
Patentanwaltsbüro
Tiedtke-Bühling-Kinne & Partner
Bavariaring 4
80336 München (DE)

# (54) Titanium amino alcohol complex, method for manufacturing the same, titanium dioxide solution of the complex, titanium oxide film, titanium oxide powder, and method for manufacturing the titanium oxide film

(57) A titanium amino alcohol complex, a method for manufacturing the titanium amino alcohol complex, a titanium-containing product manufactured using the titanium amino alcohol complex as a starting material, and a solution containing titanium amino alcohol complex which can be used as a precursor in the manufacture of the titanium-containing product are disclosed. The titanium amino alcohol complex is represented by the following general formula (1):

$$Ti_x[(OR^1)_nN]_x[(OR^1)_x(R^1OH)_y] \quad (1)$$

wherein $R^1$ represents an alkylene group or arylene group, x denotes a number of from 1 to 3, y denotes a number of 3-x, and n denotes a number of from 1 to 3.



Printed by Xerox (UK) Business Services
2.16.6/3.4

## Description

### BACKGROUND OF THE INVENTION

#### Field of the Invention

This invention relates to a titanium amino alcohol complex, a method for manufacturing the titanium amino alcohol complex, a titanium-containing product manufactured using the titanium amino alcohol complex as a starting material, and a solution containing titanium amino alcohol complex which can be used as a precursor in the manufacture of the titanium-containing product.

#### Description of the Background Art

Titanium dioxide as a film is often used as an efficient photocatalyst and semiconductor electrode (T. Sakata, in Photocatalysis, ed. N. Serepone and E. Pelizzetti, Wiley, New York, 1989, P311; and D.E. Scaife, Sol. Energy, 1980, 25, 41).

The $TiO_2$ can be used either as an active agent or an inert support. The catalytic oxidation of o-xylene to phthalic anhydride using a mixture of $TiO_2$ and $V_2O_3$ as a catalyst on an inert support, is a well-established commercial method (M.S. Wainwright and N.R. Foster, Catal. Rev. Sci. Eng. (1917), 19(2), 211).

There is also a very interesting research relating to the photocatalytic splitting of water using titanium dioxide to give hydrogen, which is used as a fuel (A.J. Bard, Science, (1980), 207, 139; E. Borgarello et al, J. Am. Chem. Soc. (1982), 104(11), 2996).

As described, titanium dioxide has attracted considerable attention in recent years. A higher ratio of the anatase modification in titanium dioxide is preferable to exhibit a high photocatalytic function.

The ratio of the anatase modification in titanium dioxide varies corresponding to the types of titanium compound used as a raw material.

For example, J. European Ceramic Society, 1988, 287-297, Laine et al describes a titanium dioxide powder produced from a precursor which is obtained by reacting titanium dioxide with triethanolamine and ethylene glycol. However, the titanium dioxide product contains 10 to 15% of rutile titanium dioxide.

Thus, these titanium compounds all have an insufficient ratio of the anatase modification.

In recent sol/gel methods, in turn, products including titanium compounds can be produced in the form of powder, a fiber, or a film. Titanium alkoxide such as isopropyl titanate is often used as a raw material in this method.

In such a method, the addition of a control agent such as acetylacetonate is expected to improve the stability of a sol of titanium alkoxide.

However, even this method does not give titanium dioxide with a sufficient anatase ratio.

It is an object of the present invention to provide a titanium amino alcohol complex which ensures production of titanium dioxide with a high ratio of the anatase modification, a method for manufacturing the titanium amino alcohol complex, and titanium dioxide produced from the titanium amino alcohol complex.

### SUMMARY OF THE INVENTION

According to the present invention, there is provided a titanium amino alcohol complex represented by the following general formula (1):

$$Ti_x[(OR^1)_nN]_x[(OR^1)_x(R^1OH)_y] \qquad (1)$$

wherein $R^1$ represents an alkylene group or an arylene group, x denotes a number of from 1 to 3, y denotes a number of 3-x, and n denotes a number of from 1 to 3.

### BRIEF DESCRIPTION OF THE DRAWINGS

Figure 1 shows an XRD spectra of a $TiO_2$ produced by the process in Example 3.

Figure 2 shows an XRD spectra of a $TiO_2$ as produced by the process in Comparative Example 1.

Figure 3 shows an XRD spectra for a $TiO_2$ produced by the process in Comparative Example 2.

### DETAILED DESCRIPTION OF THE PREFERRED EMBODIMENT

As the alkylene group $R^1$ in the above general formula (1), ethylene group, propylene group, butylene group or the

like is preferable. The alkylene group may be branch group.

As the arylene group $R^1$ in the above general formul (1), phenylene group, benzylene group, naphthylene group or the like is preferable.

It is preferably that the ratio of the titanium atom and the nitrogen atom (Ti:N) in the compound represented by the general formula (1) of the present invention be 1:2 to 3:4.

The compound represented by the general formula (1) of the present invention may be partially hydrolyzed.

Titanic acid used in the manufacture of the compound represented by the general formula (1) in the present invention is generally represented by the formula $TiO(OH)_2 \cdot pH_2O$ or $Ti(OH)_4 \cdot pH_2O$ wherein p is greater than zero.

Titanic acid used in the present invention is generally obtained from titanyl sulfonate or titanium chloride. For example, titanic acid is produced by reacting titanyl sulfonate or titanium chloride with alkali compound such as $NH_4$ solution.

In the present invention, titanic acid is preferably used as the raw material for titanium dioxide having a high ratio of the anatase modification.

Examples of amino alcohol used in the present invention are compounds represented by the formula $(HOR^1)_nNR^2_{3-n}$, wherein $R^1$ and n are the same as defined in the above general formula (1), and $R^2$ represents a hydrogen atom, an alkylene group or an arylene group.

Preferably typical examples of amino alcohol include triethanolamine, diethanolamine, monoethanolamine, triisopropanolamine, diisopropanolamine, monoisopropanolamine, methyldiethanolamine, dimethylmonoethanolamine, ethyldiethanolamine and diethylmonoethanolamine.

The reaction of the titanium compound with amino alcohol is preferably performed in the presence of a solvent such as monoalcohol, diol or triol.

Examples of the monalcohol used in the present invention are compounds indicated by the formula $R^5OH$ wherein $R^5$ represents a linear or branched alkyl group having 6 to 10 carbon atoms, or a linear or branched alkyl group having 5 to 10 carbon atoms interspersed with one or more oxygen atom.

Preferably typical examples of the alcohol include alcohols having a boiling point of 150°C or more, such as 2-ethylhexanol, 3,5,5-trimethyl-1hexanol, octanol methoxyethoxyethanol and the like.

Preferred examples of the diol are compounds represented by the formula $HO(R^6)OH$ wherein $R^6$ represents a linear or branched alkylene group having 2 to 12 carbon atoms. Preferably typical examples of the diol include ethylene glycol, propylene glycol, hexamethylene diol, 1,2-butanediol and 1,3-butanediol.

Examples of the triol include glycerin, 1,2,6-hexane triol and the like.

In addition, an excess amount of amino alcohol, for example, may be used as the solvent.

When the titanic acid and the amino alcohol are reacted, the amino alcohol is added in the proportion of 0.5 to 5 mol, preferably 1 to 3 mol, and more preferably 1.5 to 2.5 mol, for one mol of the titanic acid.

In the present invention, when reacting the titanic acid and the amino alcohol, a catalyst such as an alkali metal may be used.

The temperature in the reaction of the titanic acid and amino alcohol is preferably from about 90 to 280°C, more preferably from 90 to 260°C, and most preferably from 90 to 150°C. The reaction time is preferably from about 1 to 40 hours and more preferably from 2 to 10 hours. The reaction pressure is preferably from about 0.01 to 1.0 atmosphere and more preferably from 0.01 to 0.2 atmosphere.

Where a solvent is used when the titanic acid and amino alcohol are reacted, it is preferable to carry out the reaction at a temperature equal or close to the boiling point of the solvent at the specific pressure.

The reaction temperature is preferably in a range of from about 90 to 280°C, more preferably from 90 to 260°C and most preferably from 90 to 150°C. The reaction time is preferably from about 1 to 40 hours and more preferably 2 to 10 hours. The reaction pressure is preferably from about 0.01 to 1.0 atmosphere and more preferably from 0.01 to 0.2 atmosphere.

If the reaction is to be carried out at atmospheric pressure, it is preferable that the titanic acid and amino alcohol be mixed in a distillation apparatus in which air is replaced with an inert gas, for example, argon, or nitrogen gas in general. The inert gas may be a known gas other than the above gases.

A mixture of the titanic acid and amino alcohol is heated and reacted while producing by-product water, which is continuously removed. In this case, the removal of by-produced water from the reaction mixture is accelerated by continuously evaporating the solvent. The removal of water is also accelerated by carrying out the reaction under reduced pressure.

After completion of the reaction, the solvent is removed and the resulting product is refined by a recrystallization method or the like to produce a titanium amino alcohol complex.

The titanium amino alcohol complex produced by the method of the present invention is preferably a mixture of the following compounds (a) to (c).

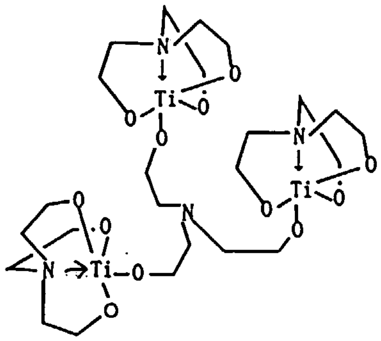

(a)

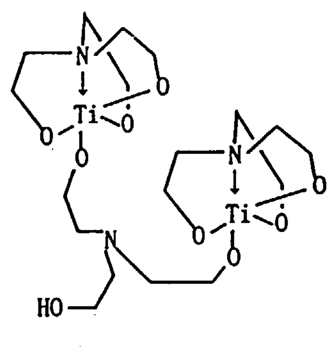

(b)

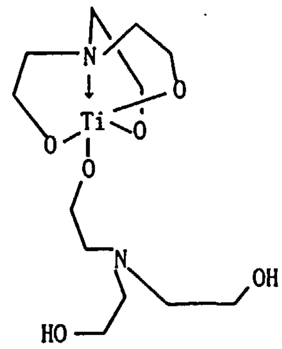

(c)

In the present invention, it is preferable to use a solution in which a titanium amino alcohol complex is dissolved in a solvent to produce a titanium dioxide-containing product.

Here, examples of the solvent include water and alcoholic solvents having 1 to 10 carbon atoms such as hexamethylene glycol, isopropylene glycol, methanol, ethanol, and the like.

These alcohols may be used by mixing with a non-alcoholic solvent such as toluene, chloroform and the like.

The concentration of the titanium amino alcohol complex in the solution is preferably from 0.06 to 2.0 mols/liter and more preferably from 0.12 to 2.0 mol/liter as the concentration of Ti.

A considerable proportion of a non-volatile oligomer or polymer amine, polyethylene glycol or polyvinyl alcohol may be added to the solution of the titanium amino alcohol.

Generally, the titanium amino alcohol complex is preferably hydrolyzed prior to the heating in the present invention.

In the present invention, the titanium amino alcohol complex is made into a solution, and water is then added to the solution or the titanium amino alcohol complex is dissolved in an organic solvent containing water, to thereby hydrolyze the titanium amino alcohol complex.

Water added for the hydrolysis is in such an amount that the molar ratio of water and Ti ($H_2O/Ti$) is preferably in a range from 2/1 to 200/1 and more preferably from 50/1 to 150/1.

Where water is used as a solvent, the water is added to dissolve the complex and also dilute the resulting sol to 0.1 to 1.6 mols as $TiO_2$.

In the present invention, despite the complete hydrolysis of the titanium amino alcohol complexes, the presence of the amino alcohols stabilizes the titanates, thereby preventing oxides from being precipitated or gelled.

No gel formation occurs for the titanium amino triethanolamine even if using the range of concentrations from 0.06 to 1.5 mols/liter in the present invention.

Using the hydrolyzed titanium amino alcohol complex solution, gelation occurs if the pH is raised to 8 to 14, more preferably 9 to 11, and most preferably 10. Warming the high pH sol above 50°C increases the gelation rate.

A base used to increase the pH may be preferably selected from aqueous $NH_3$, $(NH_4)_2CO_3$, $(NH_4)HCO_3$, NaOH, $Na_2CO_3$, $NaHCO_3$ and other well-known alkalis. The most preferable base is aqueous $NH_3$.

In this manner, gel is produced by the addition of an alkali to the solution of the hydrolyzed titanium amino alcohol complex.

On the other hand, the sol remains stable if no alkali is added.

For diethanolamine or N-methyldiethanolamine complexes, gelation will eventually occur even if no alkali is added. In particular, heating the sol above room temperature decreases the gelation time. Preferably the sol is heated between 50°C and 80°C for rapid gelation.

The sol or gel produced in this manner is heated to create the anatase modification of titanium oxide.

In the present invention, the heating temperature for the sol or gel is from about 500 to 700°C, preferably from 600 to 700°C, and most preferably 650°C.

A layer of the sol or gel obtained from the solution of the titanium amino alcohol complex of the present invention is formed on a substrate and is calcined to form rutile-free anatase thin films of titanium oxide on substrates such as glass, silicon, or other surfaces.

A conventional method such as a dipping method, casting method, spin-coating method, roll coating method or the like may be used to apply the solution of the titanium amino alcohol complex to a substrate.

Titanium dioxide manufactured by the method of the present invention contains the anatase modification in a ratio by percentage of generally 60 or more, preferably 80 or more, and most preferably 95 or more. This anatase modification is not converted to rutile even at firing temperatures above 650°C.

Examples of the substrates on which titanium dioxide produced from the titanium amino alcohol complex of the present invention can be formed are glasses such as soda-glass, quarts glass, and the like, ceramics, and metals such as stainless steel, and the like.

The glass on which titanium dioxide produced from the titanium amino alcohol complex of the present invention is formed can be widely used for vehicles such as automobiles, and in constructions such as for housings and buildings.

The present invention will be explained in more detail by way of examples, which are not intended to be limiting the present invention.

REFERENCE EXAMPLE

30 wt% of aqueous ammonia water was added to 25.1 g of titanyl sulfonate ($TiOSO_4$, 0.016 mol) such that the pH was 9. Aqueous ammonia was further added thereto, and the resulting mixture was cooled for 16 hours to form a titanic acid sol.

Filtration and washing with purified water were repeated several times, and it was confirmed with a saturated barium hydroxide solution that residual sulfonate ion was not present.

The titanic acid sol thus obtained had $TiO_2$ content of 18 wt%, and was non-crystalline.

EXAMPLE 1

40 g (0.087 mol calculated as $TiO_2$) of the titanic acid so] obtained in the Reference Example above was added to 19.37 g (0.13 mol) of triethanolamine and 80 ml of ethylene glycol, and the resulting mixture was reacted at 120°C and 6 kPa for 3.5 hours using a silicone oil bath.

When about a half amount of ethylene glycol was distilled off, the reaction liquid became transparent and all titanic acid was reacted.

The pressure in the reactor was reduced to 1.2 kPa, and the temperature was raised to 150°C, thereby removing the residual ethylene glycol.

Amount of the crude titamium amino alcohol complex which Ti:N ratio is 1:1.5 thus obtained was 28.0 9.

EXAMPLE 2

4.0 g of titanic acid was added to 50 ml of triethanolamine and 100 ml of ethylene glycol, and the resulting mixture was reacted at 205°C for 3.5 hours using a silicone oil bath.

Ethylene glycol was distilled off at a rate of about 1.0 ml/hr.

After 24 hours, the reaction mixture was subjected to vacuum distillation to remove the ballance of ethylene glycol and excess triethanolamine.

The reaction product obtained was dissolved in dry ethanol and the resulting solution was filtered through a millipore filter to remove residual unreacted titanic acid (0.1 g or less).

Further, ethanol was distilled off to obtain a titanium triethanolamine complex.

EXAMPLE 3

25 g (0.058 mol calculated as $TiO_2$) of titanic acid sol obtained in the Reference Example above was added to 35 g (0.23 mol) of triethanolamine and 100 ml of methoxyethyoxyethanol, and the resulting mixture was reacted at 120°C and 6 kPa for 4 hours using a silicone oil bath. When about a half of ethylene glycol was distilled off, the reaction liquid became transparent and all titanic acid was reacted.

The pressure in the reactor was reduced to 1.2 kPa, and the temperature was raised to 150°C, thereby removing the residual methoxyethoxyethanol.

Amount of the crude titamium amino alcohol complex which Ti:N ratio is 1:4 thus obtained was 28.1 g.

EXAMPLE 4

25 g (0.058 mol calculated as $TiO_2$) of titanic acid sol obtained in the Reference Example above was added to 100 ml of N-methyl diethanolamine and 80 ml of ethylene glycol, and the resulting mixture was reacted at 120°C and 6 kPa for 2 hours using a silicone oil bath. When about a halt of ethylene glycol was distilled off, the reaction liquid became transparent and all titanic acid was reacted.

The pressure in the reactor was reduced to 1.2 kPa, and the temperature was raised to 150°C, thereby removing the residual N-methyl ethanolamine.

Amount of the crude titamium amino alcohol complex thus obtained was 12.5 g.

EXAMPLE 5

A titainum amino alcohol complex obtained in Example 1 was dissolved in ethanol so that the concentration of Ti was 0.36 mols/l, to prepare a sol/gel precursor of titanium oxide.

A titanium oxide gel was prepared by the following procedures:

5 ml of water which had been adjusted to a pH of 10 by the addition of 25 wt% $NH_3$ solution was added dropwise to 5 ml of the titanium amino alcohol complex/ethanol solution. The so] was stirred for 30 minutes and then transferred to a flat petri dish. The solvent and water were evaporated off at 80°C for 16 hours. During this step, gelation occurred.

The obtained gel was clear golden and firm to the tough. The gel was then washed with ethanol and was dried.

The gel product was calcined at both 400°C and 600 °C whereby the gel was crystallized to produce only the anatase modification of $TiO_2$.

EXAMPLE 6

Anatase titanium oxide:

(1) 3 g of the titanium amino alcohol complex obtained in Example 2 above was dissolved in 10 ml of anhydrous ethanol. 10 ml of 50% aqueous ethanol was added dropwise to the solution thus obtained while stirring, thereby forming a sol.

(2) 3 ml of 28% aqueous ammonia was added dropwise to the sol thus obtained while stirring, and the resulting mixture was aged at 70°C for 1 hour to obtain a gel.

(3) The gel obtained was air-dried for 12 hours, and then dried under heating at 80°C for 2 hours. The temeprature was raised from room temperature to 500°C at a rate of 5°C/min, and the gel was maintained at 500°C for 15 minutes. The temperature was then raised from 500°C to 650°C, and the gel was maitained at 650°C for 5 minutes to obtain titanium oxide.

(4) When the titanium oxide obtained was irradiated with X-ray having a diffraction angle of 2θ (output conditions: 400 kV x 100 mA, CuK wavelength), a diffraction peak as shown in Fig. 1 was obtained.

When the anatase ratio (f) was determined by the following equation, the anatase ratio of the titanium oxide obtained was almost 100%:

$$f = 1/(1 + 1.265 \times Ir/Ia)$$

wherein Ia is a peak intensity (anatase $TiO_2$) of 2θ=25.3 to 25.5, and Ir is a peak intensity (rutile $TiO_2$) of 2θ=27.5 to 27.9.

The anatase titanium oxide was not converted to a rutile even though heated at high temperature of 650°C for 30 minutes.

EXAMPLE 7

Manufacture example of anatase film:

The titanium amino alcohol complex obtained in Example 1 above was diluted with isopropyl alcohol containing 10 vol% of water, thereby preparing a precursor solution having a titanium concentration of 0.1 mol%.

The presursor solution was dropped onto an a ⟨100⟩ oriented single crystal silicon substrate (1 $cm^2$ surface area), and allowed to spread across the surface of the substrate prior to spinning. The substrate and organic material were then spun at 5,000 rpm for 30 minutes, thereby a thin organic gel layer was formed on the substrate.

The silicon substrate was subsequently heated to 650°C at a rate of approximately 10 K/second, and the substrate was maintained at this temperature for 15 minutes. After this heat treatment, the substrate was cooled to room temperature at a rate of approximately 50 K/second. A further four coatings were made over the first layer according to the method described above. Finally the substrate was maintained at this temperature (350°C) for 15 minutes, and then cooled to room temperature at a rate of approximately 50 K/second.

The resulting film formed on the substrate was identified as the anatase cryatalline form of titanium oxide (ICDD file 21-1272) using standard methods of X-ray diffraction. No other crystalline phases were detected except for those which were due to the crystalline silicon of the substrate. The film thickness by a step method was 0.3 μm.

COMPARATIVE EXAMPLE 1

Titanium dioxide was obtained in the same manner as in Example 5 (1)-(3) except that 5 ml of 80 wt% isopropanol solution of diisopropoxytitanium bis(triethanolaminate) (a product of Matsumoto Seiyaku Co.) was used in place of the anhydrous ethanol solution of the titanium amino alcohol complex obtained in Example 1.

As a result of measuring X-ray diffraction of the titanium oxide obtained in the same manner as in Example 5 (4), a diffraction peak as shown in Fig. 2 was obtained.

As a result of determining the anatase ratio in the same manner as in Example 5 (4), it was found to be 72.5%.

COMPARATIVE EXAMPLE 2

Titanium dioxide was obtained in the same manner as in Example 5 (1)-(3) except that 5 ml of 80 wt% butanol solution of dibutoxytitanium bis(triethanolaminate) (a product of Nippon Soda Co.) was used in place of the anhydrous ethanol solution of the titanium amino alcohol complex obtained in Example 1. In this Example however, a solvent remained even after drying at 80°C for 2 hours, but heating at 500°C was conducted without removing the solvent.

As a result of measuring X-ray diffraction of the titanium oxide thus obtained in the same manner as in Example 5 (4), a diffraction peak as shown in Fig. 3 was obtained.

As a result of determining the anatase ratio in the same manner as in Example 5 (4), it was found to be 18.7%.

The present invention provides a method for manufacturing a titanium amino alcohol complex using titanic acid as a starting material. Hydrolysis of a solution of the produced complex (precursor) enables production of a sol and gel containing titanium. The sol or gel containing titanium is heated at high temperature to obtain titanium-containing products in the form of a film or powder which are composed of anatase modification of titanium dioxide including a little rutile.

Those titanium-containing products have a highly photocatalystic function and excellent hydrophilic properties and therefore can be applied to fields of surface reforming for construction and automobile parts.

A titanium amino alcohol complex, a method for manufacturing the titanium amino alcohol complex, a titanium-containing product manufactured using the titanium amino alcohol complex as a starting material, and a solution containing titanium amino alcohol complex which can be used as a precursor in the manufacture of the titanium-containing product are disclosed. The titanium amino alcohol complex is represented by the following general formula (1):

$$Ti_x[(OR^1)_nN]_x[(OR^1)_x(R^1OH)_y] \quad (1)$$

wherein $R^1$ represents an alkylene group or arylene group, x denotes a number of from 1 to 3, y denotes a number of 3-x, and n denotes a number of from 1 to 3.

## Claims

1. A titanium amino alcohol complex represented by the following general formula (1):

$$Ti_x[(OR^1)_nN]_x[(OR^1)_x(R^1OH)_y] \quad (1)$$

wherein $R^1$ represents an alkylene group or an arylene group, x denotes a number of from 1 to 3, y denotes a number of 3-x, and n denotes a number of from 1 to 3.

2. The titanium amino alcohol complex according to Claim 1, wherein the alkylene group $R^1$ is a group selected from the group consisting of ethylene group, propylene group, and butylene group.

3. The titainum amino alcohol complex according to Claim 1, wherein the arylene group $R^1$ is a group selected from the group consisting of a phenylene group, a benzylene group and a naphthylene group.

4. The titanium amino alcohol complex according to Claim 1, wherein the compound represented by the general formula (1) is partially hydrolyzed.

5. A method for manufacturing a titanium amino alcohol complex comprising a step of reacting a titanic acid with an amino alcohol.

6. A solution comprising the titanium amino alcohol complex obtained in claim 5, the titanium amino alcohol complex being dissolved in a solvent.

7. The solution according to Claim 6, wherein the solvent is selected from the group consisting of water, an organic solvent, and mixtures thereof.

8. A titanium dioxide produced by heating a titanium amino alcohol complex obtained in claim 5.

9. The titanium dioxide according to Claim 8, wherein said titanium dioxide forms a film.

10. The titanium dioxide according to Claim 8, wherein said titanium dioxide forms a powder.

11. A substrate formed with a titanium dioxide on the surface thereof, said titanium dioxide being produced by heating a titanium amino alcohol complex obtained in claim 5.

FIG. 1

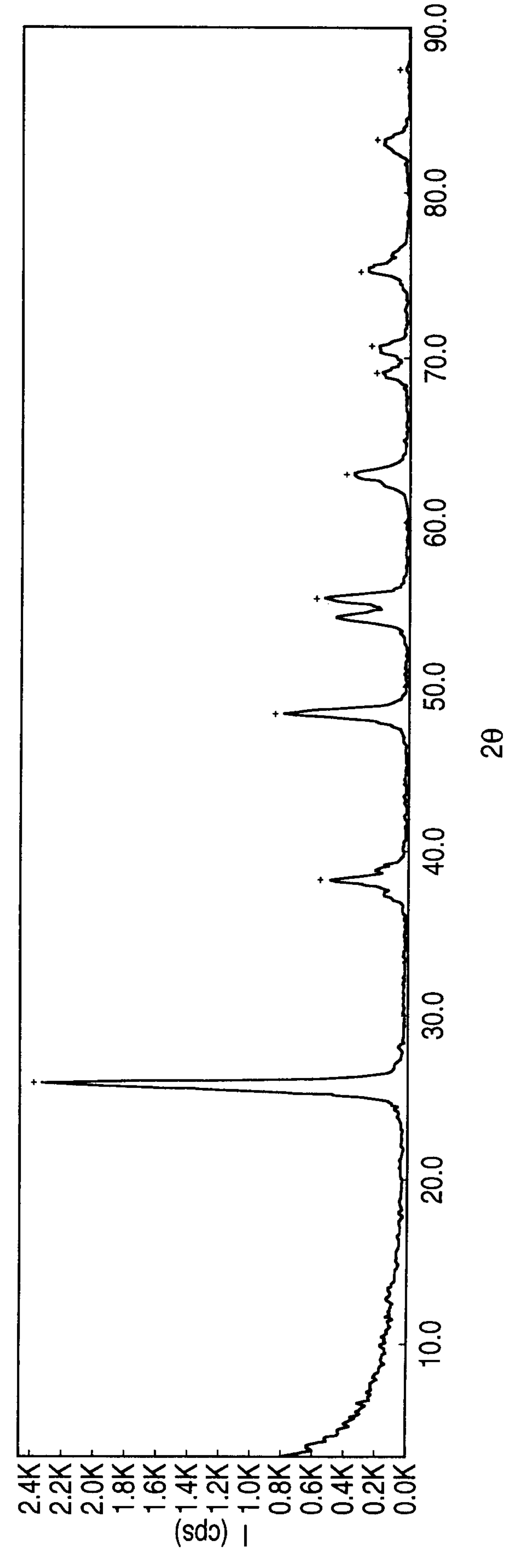
I (cps)
2.4K
2.2K
2.0K
1.8K
1.6K
1.4K
1.2K
1.0K
0.8K
0.6K
0.4K
0.2K
0.0K
10.0
20.0
30.0
40.0
50.0
60.0
70.0
80.0
90.0
2θ

FIG. 2

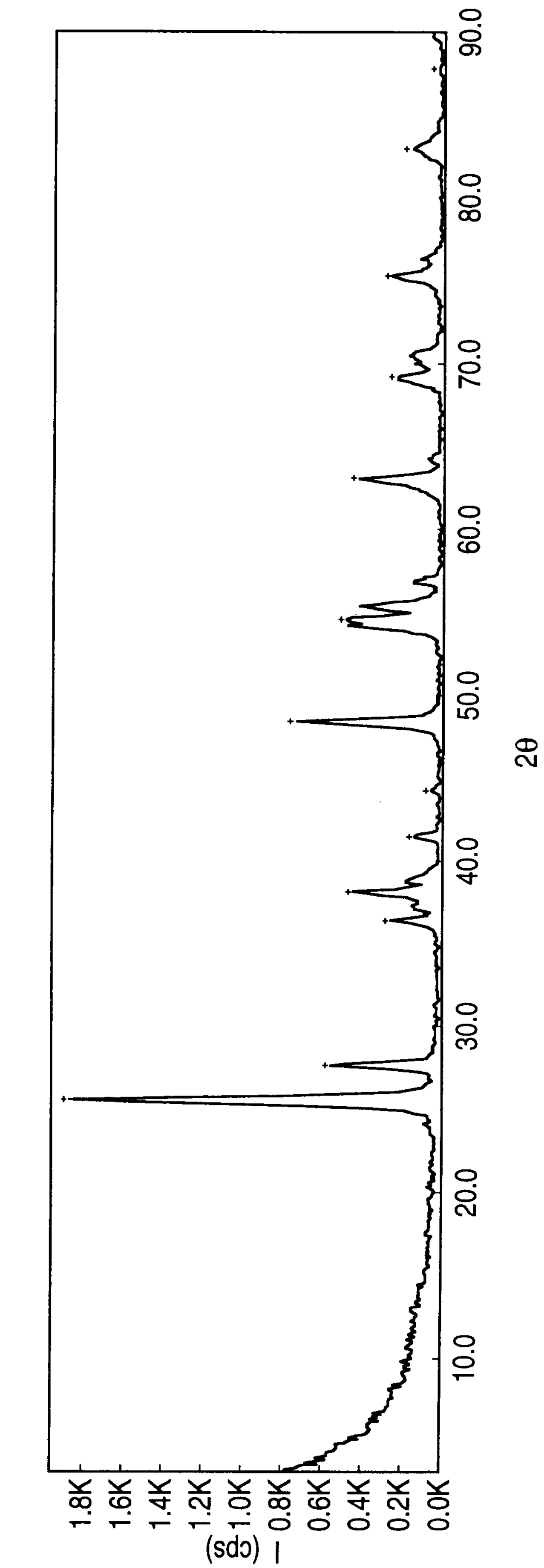
I (cps)
1.8K
1.6K
1.4K
1.2K
1.0K
0.8K
0.6K
0.4K
0.2K
0.0K
10.0
20.0
30.0
40.0
50.0
60.0
70.0
80.0
90.0
2θ

FIG. 3

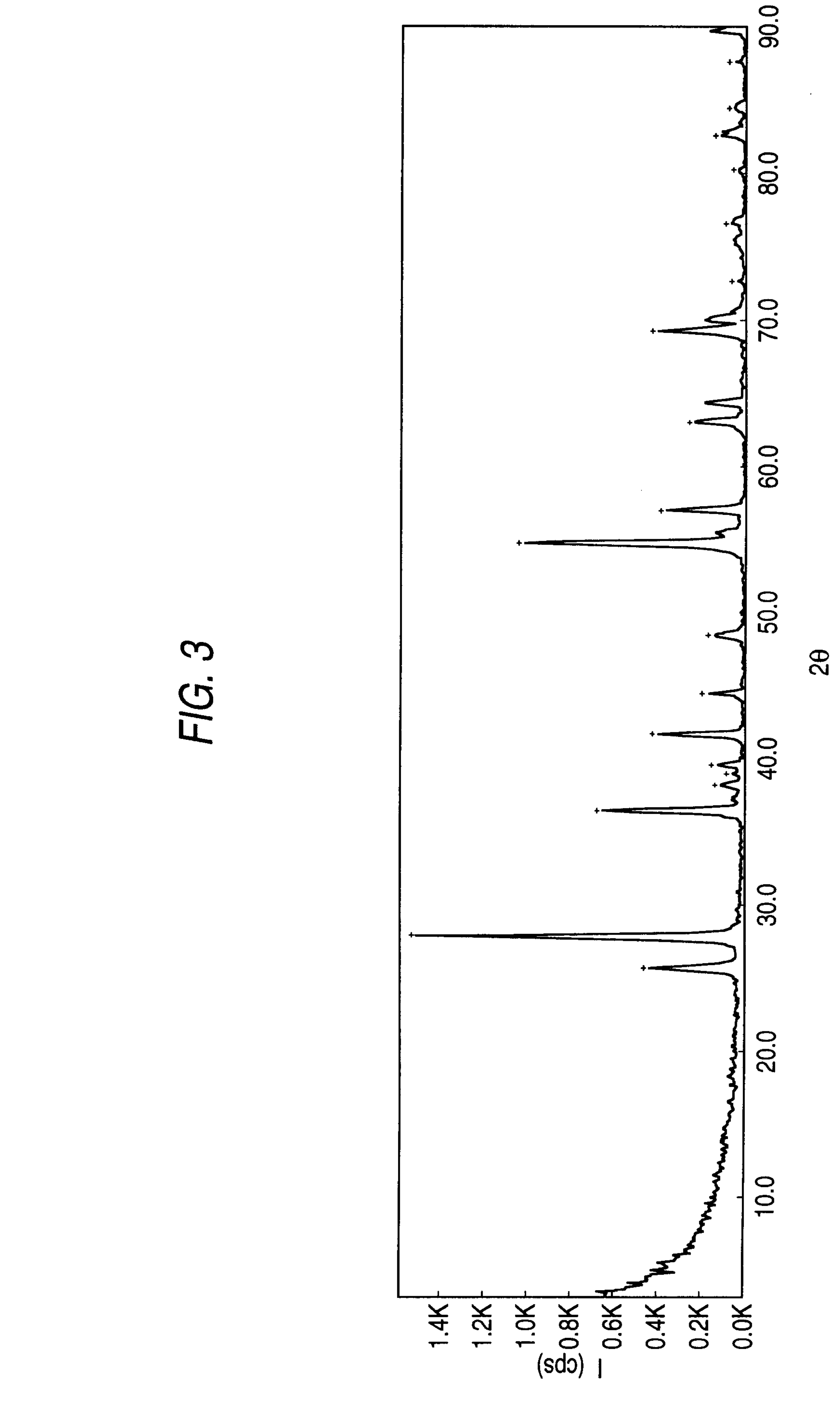
I (cps)
0.0K
0.2K
0.4K
0.6K
0.8K
1.0K
1.2K
1.4K
10.0
20.0
30.0
40.0
50.0
60.0
70.0
80.0
90.0
2θ